# EUROPEAN PATENT SPECIFICATION

(11) **EP 3 819 578 B1**
(45) Date of publication and mention of the grant of the patent: **21.06.2023**
(21) Application number: 19461600.9
(22) Date of filing: 06.11.2019
(51) Int. Cl.: F28D 1/053, F28D 21/00, F28D 1/04, F28F 13/06, F28F 9/22, F28F 9/02, B60H 1/00, F25B 39/00, F28F 27/02

(54) **A HEAT EXCHANGER WITH CONTROLLING MEANS**
WÄRMETAUSCHER MIT STEUERUNGSMITTELN
ÉCHANGEUR DE CHALEUR DOTÉ D'UN MOYEN DE COMMANDE

(43) Date of publication of application: 12.05.2021
(73) Proprietor: Valeo Autosystemy SP. Z.O.O., 32-050 Skawina (PL)
(72) Inventor: BELZOWSKI, Michal, 32 050 SKAWINA (PL); POKRYWINSKI, Karol, 32 050 SKAWINA (PL); SZOSTEK, Dawid, 32 050 SKAWINA (PL)
(74) Representative: Valeo Systèmes Thermiques

(56) References cited:
- GB-A- 2 409 510
- JP-A- 2001 012 823
- US-A1- 2007 240 850
- US-A1- 2008 023 182
- US-A1- 2015 251 517
- US-A1- 2018 274 864

## Description

### FIELD OF THE INVENTION

The invention relates to heat exchangers for air conditioning and heat pump applications. In particular, it relates to heat exchangers for use in automotive industry.

### BACKGROUND OF THE INVENTION

There are known heat exchangers adapted to work in so-called AC mode (air conditioning mode). In AC mode, the heat exchanger works as an ordinary condenser. The refrigerant at the inlet at a typical operation point is in gaseous state and needs to be cooled inside the core in order to deliver liquid, subcooled refrigerant at outlet. For this mode, the cores are usually configured in manner ensuring that number of tubes in first pass is significantly greater than number of tubes in second pass. Number of tubes in second pass may be usually 8-12 when total number of tubes may be equal or above 60 for some specific application. This solution is beneficial, because it allows decrease in pressure drop in first pass, where density of refrigerant is small and consequently the volumetric flow is significant. At the entry to the second pass the refrigerant is condensed, i.e. it is fluid or mostly fluid, while its density is significantly higher and in connection to that volumetric flow is also significantly lower. Such configuration allows a decent compromise in terms of size to performance ratio.

There are also known heat exchangers adapted to work in a so-called HP mode (heat pump mode). In HP mode, the temperature of refrigerant at inlet is lower than temperature of air flowing through the core. Refrigerant is heated inside core and in the second pass temperature of refrigerant is higher and due to that density is smaller than in the first pass. Optimal proportion of tubes in the first and the second pass is between 50% for the first pass and 50% for the second pass to 30% for the first pass and 70% for the second pass.

While it is preferable to enable flow from top to bottom within the heat exchanger adapted for AC mode, it is preferable to enable flow from bottom to top within the heat exchanger adapted for HP mode.

It is possible to use a single heat exchanger, in particular an evapo-condenser, which operates alternatively in the AC and HP mode. For such application, the flow through this heat exchanger can be reversed between the modes, or can be maintained common for both. From the component point of view, in may be preferable to have the reversed flow.

Due to difference in preference for the amount of tubes per pass for the above-mentioned modes, it is cumbersome to provide an effective heat exchanger without settling for a compromise.

It would be desirable to provide an effective heat exchanger adapted to work both in the AC mode and the HP mode in an effective manner when the reversal of the direction of the fluid flow occurs between the modes. A heat exchanger comprising multiple passes operable in a first and second state according to the preamble of claim 1 is disclosed in document US 2018/274864 A1.

### SUMMARY OF THE INVENTION

The object of the invention is, among others, a heat exchanger comprising a first manifold and a second manifold connected by a bundle of tubes, configured to provide a first pass, a second pass and a third pass for a heat exchange fluid, characterized in that the heat exchanger comprises controlling means for directing the flow within the heat exchanger, adapted to switch between a first state, in which co-flow is enabled for the first and second passes, both being in a counter-flow relation to the third pass, and a second state, in which co-flow is enabled for the second and third passes, both being in a counter-flow relation to the first pass.

Preferably, the controlling means are adapted to switch between the first state and the second state in response to direction of flow in the heat exchanger.

Preferably, the controlling means are adapted to switch between the first state and the second state in response to pressure difference of the fluid in the passes adapted for counterflow.

According to the invention, the heat exchanger further comprises a body connected fluidically to the first manifold so that it can receive the fluid from and distribute the fluid to the first pass, second pass and third pass, wherein the body comprises the controlling means.

Preferably, the controlling means comprise a movable flow-blocking element adapted to block the flow between the second pass and the third pass in the first state, and adapted to block the flow between the first pass and the second pass in the second state.

Preferably, the flow-blocking element is adapted to enable the flow between the second pass and the third pass in the first state, and is adapted to enable the flow between the first pass and the second pass in the second state.

Preferably, the first pass is associated directly with a first port, wherein the third pass is associated directly with a second port.

Preferably, the controlling means are adapted to switch between the first state and the second state based on temperature of the core and/or environment of the heat exchanger.

Another object of the invention is an air conditioning circuit comprising a heat exchanger as described above

### BRIEF DESCRITPTION OF DRAWINGS

Examples of the invention will be apparent from and described in detail with reference to the accompanying drawings, in which:
Fig. 1 shows the heat exchanger in air conditioning mode;
Fig. 2 shows the heat exchanger in heat pump mode.

### DETAILED DESCRIPTION OF EMBODIMENTS

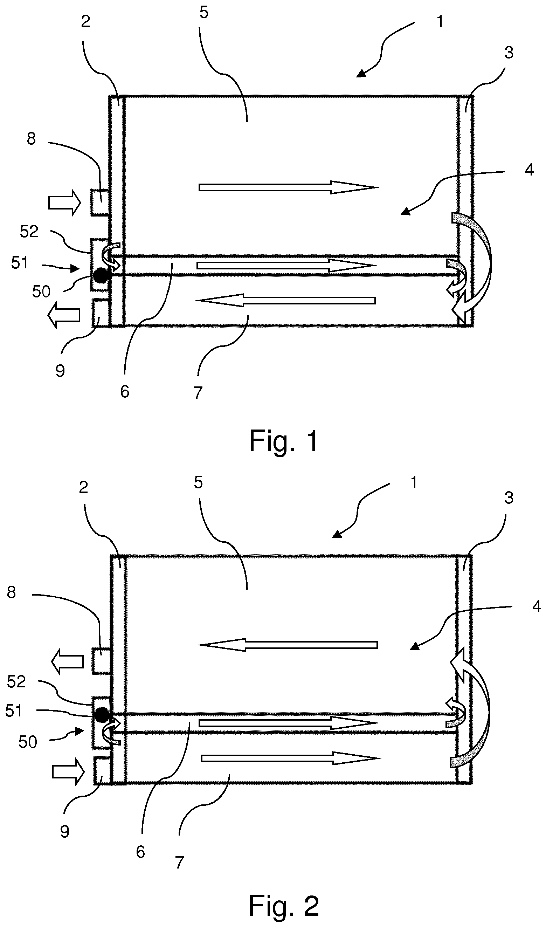

Fig. 1 shows the heat exchanger in air conditioning (AC) mode, while Fig. 2 shows the heat exchanger in the heat pump (HP) mode.

The heat exchanger 1 comprises a first manifold 2 and a second manifold 3. The manifolds 2, 3 are connected by a bundle of tubes 4. The heat exchanger is configured to provide a first pass 5, a second pass 6 and a third pass 7 for a heat exchange fluid. The tubes 4 within the bundle are spaced with respect to each other to enable heat exchange with a second fluid, for example air, travelling through the spaces between the tubes. Said spaces may comprise fins for facilitating the heat exchange.

The heat exchanger may further comprise a first port 8 associated with the first pass 5 and a second port 9 associated with the third pass 7, wherein both are located on the first manifold 2. In other words, the first port 8 is in fluid communication with the first pass 5, so that the fluid can enter or leave the first pass 5 through the first port 8, depending on the direction of the flow, while the second port 9 is in fluid communication with the third pass 7, so that the fluid can enter or leave the third pass 7 through the second port 9, also depending on the direction of the flow.

The first pass 5 may comprise the biggest amount of tubes among all the passes.

The second pass 6 may comprise the smallest amount of tubes among the passes.

The third pass 7 may comprise an amount of tubes which is smaller than in the first pass 5 and bigger than in the second pass 6.

An exemplary the ratio of tube count within the first pass 5, the second pass 6 and the third pass 7 is 60%/20%/20% and provides satisfactory performance of the heat exchanger both in AC mode and the HP mode.

The heat exchanger 1 further comprises controlling means 50 adapted to switch between a first state and a second state. In the first state, co-flow is enabled for the first and second passes 5, 6, both being in a counter-flow relation to the third pass 7. In the second state, co-flow is enabled for the second and third pass 6, 7, both being in a counter-flow relation to the first pass 5.

The controlling means 50 may be adapted to switch between the first state and the second state in response to direction of flow in the heat exchanger.

The controlling means 50 may be adapted to switch between the first state and the second state in response to pressure difference of the fluid in the passes adapted for counterflow.

According to the invention, the controlling means 50 adapted for switching between the first state and the second state are integrated into or with a body 52 connected fluidically to the first manifold 2 so that it can receive the fluid from and distribute the fluid to the first pass 5, second pass 6 and third pass 7. For example, the controlling means 50 may comprise a movable flow-blocking element 51 adapted to block the flow between the second pass 6 and the third pass 7 in the first state on the side of the first manifold 2, e.g. within the body 52, and adapted to block the flow between the first pass 5 and the second pass 6 in the second state on the side of the first manifold 2, e.g. within the body 52. The flow however may be unrestricted between passes within the second manifold 3.

For the heat exchanger according to the invention, in AC mode the controlling means are set in the first state. The refrigerant enters the first pass 5 through the first port 8. It also enters the second pass 6, as allowed by the controlling means, so that the fluid flows in the same direction through the first pass 5 and the second pass 6. The fluid then is turned and flows in the third pass 7 in a direction opposite to the direction within the first and second pass 5, 6. The fluid then may exit the heat exchanger through the second port 9.

In HP mode the controlling means 50 are set the second state. The refrigerant enters the heat exchanger through the second port 9 and then travels through the third pass 7, as well as the second pass 6, as allowed by the controlling means 50. The fluid then is turned and flows in the first pass 5 in a direction opposite to the direction within the third and second pass 7, 6. The fluid then may exit the heat exchanger through the first port 9.

In both AC and HP mode, the switching between the first state and the second state allows to achieve optimal performance, connected with the amount of tubes for passes in each mode, despite reversing the flow within the same heat exchanger.

Several examples of controlling means are envisaged. The mechanical or electromechanical actuator can be driven by temperature (thermostatic valve) or pressure (pressure valve). Thermostatic valve can be beneficial due to fact that with switched off system, it will adjust its position according to more probable position. For example, it will switch to AC mode in summer when temperature of the environment and/or core will be high, or HP mode when temperature of the environment and/or the core will be low, for example in winter.

Other variations to the disclosed embodiments can be understood and effected by those skilled in the art in practicing the invention as defined by the appended claims. The mere fact that certain measures are recited in mutually different dependent claims does not indicate that a combination of these measures cannot be used to the advantage.

## Claims

1. A heat exchanger (1) comprising a first manifold (2) and a second manifold (3) connected by a bundle of tubes (4), configured to provide a first pass (5), a second pass (6) and a third pass (7) for a heat exchange fluid, wherein the heat
exchanger (1) comprises controlling means (50) for directing the flow within the heat exchanger, adapted to switch between a first state, in which co-flow is enabled for the first and second passes (5, 6), both being in a counter-flow relation to the third pass (7), and a second state, in which co-flow is enabled for the second and third passes (6, 7), both being in a counter-flow relation to the first pass (5), **characterized in that** the heat
exchanger (1) further comprises a body (52) connected fluidically to the first manifold (2) so that it can receive the fluid from and distribute the fluid to the first pass (5), second pass (6) and third pass (7), wherein the body (52) comprises the controlling means (50).

2. A heat exchanger (1) according to any preceding claim, wherein the controlling means (50) are adapted to switch between the first state and the second state in response to direction of flow in the heat exchanger.

3. A heat exchanger (1) according to any preceding claim, wherein the controlling means (50) are adapted to switch between the first state and the second state in response to pressure difference of the fluid in the passes adapted for counterflow.

4. A heat exchanger (1) according to any preceding claim, wherein the controlling means comprise a movable flow-blocking element (51) adapted to block the flow between the second pass and the third pass in the first state, and adapted to block the flow between the first pass and the second pass in the second state.

5. A heat exchanger (1) according to claim 4, wherein the flow-blocking element (51) is adapted to enable the flow between the second pass and the third pass in the first state, and is adapted to enable the flow between the first pass and the second pass in the second state.

6. A heat exchanger (1) according to any preceding claim, wherein the first pass (5) is associated directly with a first port (8), wherein the third pass (7) is associated directly with a second port (9).

7. A heat exchanger (1) according to any preceding claim, wherein the controlling means (50) are adapted to switch between the first state and the second state based on temperature of the core and/or environment of the heat exchanger (1).

8. An air conditioning circuit comprising a heat exchanger (1) according to any preceding claim.

## Patentansprüche

1. Wärmetauscher (1), umfassend einen ersten Verteiler (2) und einen zweiten Verteiler (3), die durch ein Bündel von Rohren (4), die dazu ausgestaltet sind, einen ersten Durchlass (5), einen zweiten Durchlass (6) und einen dritten Durchlass (7) für ein Wärmetauschfluid bereitzustellen, verbunden sind, wobei der Wärmetauscher (1) Steuerungsmittel (50) zum Lenken der Strömung innerhalb des Wärmetauschers umfasst, die dazu ausgelegt sind, zwischen einem ersten Zustand, in dem eine gleichzeitige Strömung für den ersten und zweiten Durchlass (5, 6), die sich beide in einer Gegenstrombeziehung zu dem dritten Durchlass (7) befinden, ermöglicht ist, und einem zweiten Zustand, in dem eine gleichzeitige Strömung für den zweiten und dritten Durchlass (6, 7), die sich beide in einer Gegenstrombeziehung zu dem ersten Durchlass (5) befinden, ermöglicht ist, umzuschalten, **dadurch gekennzeichnet, dass** der Wärmetauscher (1) ferner einen Körper (52) umfasst, der strömungstechnisch mit dem ersten Verteiler (2) verbunden ist, sodass er das Fluid von dem ersten Durchlass (5), dem zweiten Durchlass (6) und dem dritten Durchlass (7) empfangen und das Fluid an diese verteilen kann, wobei der Körper (52) die Steuerungsmittel (50) umfasst.

2. Wärmetauscher (1) nach einem vorangehenden Anspruch, wobei die Steuerungsmittel (50) dazu ausgelegt sind, als Reaktion auf eine Strömungsrichtung in dem Wärmetauscher zwischen dem ersten Zustand und dem zweiten Zustand umzuschalten.

3. Wärmetauscher (1) nach einem vorangehenden Anspruch, wobei die Steuerungsmittel (50) dazu ausgelegt sind, als Reaktion auf einen Druckunterschied des Fluids in den für Gegenstrom ausgelegten Durchlässen zwischen dem ersten Zustand und dem zweiten Zustand umzuschalten.

4. Wärmetauscher (1) nach einem vorangehenden Anspruch, wobei die Steuerungsmittel ein bewegbares Strömungsabsperrelement (51) umfassen, das dazu ausgelegt ist, in dem ersten Zustand die Strömung zwischen dem zweiten Durchlass und dem dritten Durchlass abzusperren, und dazu ausgelegt ist, in dem zweiten Zustand die Strömung zwischen dem ersten Durchlass und dem zweiten Durchlass abzusperren.

5. Wärmetauscher (1) nach Anspruch 4, wobei das Strömungsabsperrelement (51) dazu ausgelegt ist, in dem ersten Zustand die Strömung zwischen dem zweiten Durchlass und dem dritten Durchlass zu ermöglichen, und dazu ausgelegt ist, in dem zweiten Zustand die Strömung zwischen dem ersten Durchlass und dem zweiten Durchlass zu ermöglichen.

6. Wärmetauscher (1) nach einem vorangehenden Anspruch, wobei der erste Durchlass (5) direkt einem ersten Anschluss (8) zugeordnet ist und wobei der dritte Durchlass (7) direkt einem zweiten Anschluss (9) zugeordnet ist.

7. Wärmetauscher (1) nach einem vorangehenden Anspruch, wobei die Steuerungsmittel (50) dazu ausgelegt sind, basierend auf einer Temperatur des Kerns und/oder der Umgebung des Wärmetauschers (1) zwischen dem ersten Zustand und dem zweiten Zustand umzuschalten.

8. Klimatisierungskreislauf, der einen Wärmetauscher (1) nach einem vorangehenden Anspruch umfasst.

## Revendications

1. Échangeur de chaleur (1), comprenant un premier collecteur (2) et un second collecteur (3) raccordés par un faisceau de tubes (4), configuré pour fournir un premier passage (5), un deuxième passage (6) et un troisième passage (7) pour un fluide d'échange de chaleur, dans lequel
l'échangeur de chaleur (1) comprend des moyens de commande (50) pour diriger l'écoulement à l'intérieur de l'échangeur de chaleur, adaptés pour permuter entre un premier état, dans lequel un écoulement conjoint est permis pour les premier et deuxième passages (5, 6), les deux étant dans une relation de contre-écoulement par rapport au troisième passage (7), et un second état, dans lequel un écoulement conjoint est permis pour les deuxième et troisième passages (6, 7), les deux étant dans une relation de contre-écoulement par rapport au premier passage (5), **caractérisé en ce que**
l'échangeur de chaleur (1) comprend en outre un corps (52) raccordé fluidiquement au premier collecteur (2) pour qu'il puisse recevoir le fluide à partir des, et distribuer le fluide aux, premier passage (5), deuxième passage (6) et troisième passage (7), dans lequel le corps (52) comprend les moyens de commande (50).

2. Échangeur de chaleur (1) selon une quelconque revendication précédente, dans lequel les moyens de commande (50) sont adaptés pour permuter entre le premier état et le second état en réponse à la direction d'écoulement dans l'échangeur de chaleur.

3. Échangeur de chaleur (1) selon une quelconque revendication précédente, dans lequel les moyens de commande (50) sont adaptés pour permuter entre le premier état et le second état en réponse à une différence de pression du fluide dans les passages adaptés pour le contre-écoulement.

4. Échangeur de chaleur (1) selon une quelconque revendication précédente, dans lequel les moyens de commande comprennent un élément mobile de blocage d'écoulement (51) adapté pour bloquer l'écoulement entre le deuxième passage et le troisième passage dans le premier état, et adapté pour bloquer l'écoulement entre le premier passage et le deuxième passage dans le second état.

5. Échangeur de chaleur (1) selon la revendication 4, dans lequel l'élément de blocage d'écoulement (51) est adapté pour permettre l'écoulement entre le deuxième passage et le troisième passage dans le premier état, et est adapté pour permettre l'écoulement entre le premier passage et le deuxième passage dans le second état.

6. Échangeur de chaleur (1) selon une quelconque revendication précédente, dans lequel le premier passage (5) est associé directement à un premier orifice (8), dans lequel le troisième passage (7) est associé directement à un second orifice (9).

7. Échangeur de chaleur (1) selon une quelconque revendication précédente, dans lequel les moyens de commande (50) sont adaptés pour permuter entre le premier état et le second état sur la base de la température du noyau et/ou de l'environnement de l'échangeur de chaleur (1).

8. Circuit de climatisation, comprenant un échangeur de chaleur (1) selon une quelconque revendication précédente.
